# EUROPÄISCHE PATENTSCHRIFT

(11) **EP 2 327 340 B1**
(45) Veröffentlichungstag und Bekanntmachung des Hinweises auf die Patenterteilung: **09.05.2012**
(21) Anmeldenummer: 10014869.1
(22) Anmeldetag: 23.11.2010
(51) Int. Cl.: A47G 1/02, F21V 33/00, G02B 6/00

(54) **Leuchte und Wandspiegel mit Leuchte**
Lamp and wall mirror with lamp
Lampe et miroir mural doté d'une lampe

(30) Priorität: 25.11.2009 DE 102009055769; 23.12.2009 DE 102009060219
(43) Veröffentlichungstag der Anmeldung: 01.06.2011
(73) Patentinhaber: sam Schulte GmbH + Comp., 58706 Menden (DE)
(72) Erfinder: Schulte, Franz- Josef, 58640 Iserlohn (DE); Hilbrandt, Hartmut, 58638 Iserlohn (DE)
(74) Vertreter: Cohausz Hannig Borkowski Wißgott

(56) Entgegenhaltungen:
- DE-A1-102005 026 594
- DE-A1-102005 042 523
- DE-U1-202004 016 056
- DE-U1-202008 004 700
- GB-A- 2 324 364
- US-A1- 2007 121 331
- US-A1- 2008 260 328

## Beschreibung

Die Erfindung betrifft eine Leuchte für den Rand eines Wandspiegels insbesondere in quadratischer oder Rechteckform mit Lichtquellen, die den Raumbereich vor dem Spiegel ausleuchten.

Bekannte Leuchten nehmen meist sehr viel Platz in Anspruch und führen selten zu einer gleichmäßigen Lichtverteilung. Auch ist es bekannt, zu beiden Seiten eines Spiegels Leuchten anzuordnen, damit der sich im Spiegel Betrachtende genügend beleuchtet ist. Als Leuchtmittel werden üblicherweise mehrere Glühbirnen, zwei Leuchtstoffröhren oder LEDs verwendet. Diese bekannten Leuchtmittel benötigen verhältnismäßig viel Platz und große Lichtaustrittsflächen.

Darüber hinaus ist es aus dem deutschen Gebrauchsmuster 20 2004 000 959 bekannt, auf der Rückseite eines Schminkspiegels Leuchtdioden zu befestigen, die ihr Licht in einen ringförmigen Lichtleitkörper geben, der seitlich über den Spiegelrand vorsteht um dort eine ringförmige Lichtaustrittsfläche bildet. Auch hier wird eine große Lichtaustrittsfläche benötigt um genügend Licht abstrahlen zu können.

Ferner ist aus der US 2008/0260328 A1 ein Lichtleiter bekannt, der das Licht von Leuchtdioden zum Hinterleuchten eines Displays nutzt.

Aufgabe der Erfindung ist es, eine Leuchte für den Rand eines Wandspiegels so zu verbessern, dass bei optimaler Lichtverteilung nur schmale Lichtaustrittsflächen vorhanden sind.

Diese Aufgabe wird erfindungsgemäß dadurch gelöst,
- dass ein Lichtleitprofil vorgesehen ist mit einem über seine gesamte Länge gleich bleibendem L-förmigen Querschnitt, wobei aus der Endfläche des ersten Schenkels des Profils das Licht austritt, das in den zweiten Schenkel des Profils durch Leuchtdioden eingebracht wird;
- dass an der Verbindungsfläche beider Schenkel das Lichtleitprofil eine Schrägfläche aufweist, an der die Lichtstrahlen nach ihrem Eintritt in das Lichtleitprofil zur Lichtaustrittsfläche hin reflektiert werden;
- dass die Schrägfläche konvex gewölbt ist, und
- dass die konvexe Wölbung der Schrägfläche in eine schwächer konvex gewölbte Außenfläche des zweiten Schenkels übergeht.

Durch eine solche Konstruktion wird es möglich besonders schmale Lichtaustrittsflächen an einer, zwei oder mehr Seitenrändern eines Spiegels zu haben, bei hoher Gleichmäßigkeit des Lichtaustritts und damit ohne Sichtbarkeit der einzelnen Leuchtdioden. Es ist eine optimale Lichtverteilung vor dem Spiegel gegeben und die Lichtaustrittsfläche(n) kann/können optimal einem Objekt insbesondere einem quadratischen oder rechteckförmigen Spiegel angepasst werden. Insbesondere kann der Spiegel auf zwei Seiten oder auf allen vier Seiten mit Lichtaustrittsflächen versehen werden, die den Maßen des Spiegels entsprechen. Damit können die Lichtaustrittsflächen auch rundum angeordnet sein und einen rechteckförmigen Rahmen um den Spiegel bilden.

Darüber hinaus bildet das Lichtleitprofil eine geringe Tiefe, so dass damit ein geringer Abstand des Spiegels zur Wand erreichbar ist.

Da die Schrägfläche konvex gewölbt ist, wird eine hohe Lichtausbeute durch Totalreflexionen der Lichtstrahlen innerhalb des Lichtleitprofils erreicht. Dies wird auch dadurch verbessert, dass die konvexe Wölbung der Schrägfläche in eine schwächer konvexe gewölbte Außenfläche des zweiten Schenkels übergeht.

Vorzugsweise wird vorgeschlagen, dass das Lichtleitprofil parallel zum Spiegelrand an diesem angeordnet ist. Auch ist es besonders vorteilhaft, wenn das Lichtleitprofil einen L-förmigen Querschnitt aufweist, deren erster Schenkel die seitliche Stirnfläche des Spiegelrandes abdeckt und dessen zweiter Schenkel die Rückseite des Spiegels hintergreift.

Vorzugsweise wird vorgeschlagen, dass die Lichtaustrittsfläche in der Ebene der Spiegelvorderfläche liegt. Eine besonders günstige Lichtverteilung an der Vorderseite des Spiegels wird erreicht, wenn die Lichtaustrittsfläche konvex gewölbt ist. Hierzu ist auch von Vorteil, wenn die Lichtaustrittsfläche gegenüber der Spiegelvorderfläche derart schräg gestellt ist, dass der äußere Rand der Lichtaustrittsfläche weiter vorne liegt als der innere dem Spiegel nahen Rand.

Besonders günstige Konstruktionen und Abmessungen werden erreicht, wenn die Lichteintrittsfläche das innere Ende des zweiten Schenkels des Lichtleitprofils bildet. Alternativ wird hierzu vorgeschlagen, dass die Lichteintrittsfläche in der hinteren Seitenfläche des zweiten Schenkels angeordnet ist.

Eine platzsparende Konstruktion wird erreicht, wenn die Lichteintrittsfläche von einem Rücksprung der hinteren Seitenfläche des zweiten Schenkels gebildet ist, wobei die Leuchtdioden im Rücksprung einliegen.

Ein ausreichend großen Lichtweg innerhalb des Lichtleitprofils ist gegeben, wenn der zweite Schenkel eine größere Länge aufweist als die Länge des ersten Schenkels.

Ferner ist es von Vorteil, wenn zwischen dem ersten Schenkel und/oder dem zweiten Schenkel und dem Spiegel eine Zwischenlage aus weichem Material insbesondere aus Kunststoff, Gummi, Kork oder Pappe angeordnet ist.

Auch wird vorgeschlagen, dass das Lichtleitprofil bzw. die Lichtleitprofile außen von einem Abdeckprofil umgeben ist/sind. Hierdurch wird ein Schutz des Lichtleitprofils und ferner eine optische Optimierung erreicht. Vorzugsweise besteht der Lichtleiter aus Acryl. Besonders vorteilhaft ist es, wenn die Lichtaustrittsfläche eine Breite (B) von 3 bis 10 mm aufweist.

Besonders vorteilhaft ist es, bei einer Leuchte, wenn das Lichtleitprofil von zwei Abdeckprofilen umgeben ist, die parallel über die Länge des Lichtleitpröfils verlaufen und einen Längsspalt offen lassen, in dem der erste Schenkel einliegt und diesen insbesondere ausfüllt. Hierbei kann die Lichtaustrittsfläche des ersten Schenkels mit der/den Außenseite(n) der Abdeckprofile fluchten. Auch kann hierzu mindestens eines der Abdeckprofile einen L-förmigen Querschnitt aufweisen.

Ausführungsbeispiele der Erfindung sind in den Zeichnungen 7, 8, 15 und 16 dargestellt und werden im Folgenden näher beschrieben. Es zeigen
- Fig. 1: eine perspektivische Darstellung eines Wandspiegels,
- Fig. 2: einen waagerechten Schnitt durch den Wandspiegel nach Figur 1,
- Fig. 3: einen Schnitt durch einen alternatives Lichtleitprofil,
- Fig. 4: einen Schnitt durch eine weitere Lichtleitprofilform,
- Fig. 5: einen Schnitt durch einen weiteren Spiegel mit zusätzlichem Chromrahmen und
- Fig. 6: einen Schnitt durch einen Wandspiegel mit Holzrahmen,
- Fig. 7: Ausführung des Lichtleitprofils im Querschnitt,
- Fig. 8: die Ausführung nach Figur 7 mit eingetragenen Lichtstrahlen,
- Fig. 9: eine perspektivische Ansicht einer Leuchte,
- Fig. 10: einen Querschnitt durch die Leuchte nach Fig. 9,
- Fig. 11 und 12: eine Leuchte mit seitlich angestrahltem zweiten Schenkel,
- Fig. 13 und 14: eine Leuchte mit seitlich angestrahltem zweiten Schenkel in einem Rücksprung,
- Fig. 15 und 16: eine Leuchte mit einem gewölbte Außenflächen aufweisenden Lichtleitprofil.

Der Wandspiegel 1 weist eine rechteckförmige Platte 2 aus Glas oder transparentem Kunststoff auf, deren Rückseite 2a mit Aluminium oder Silber beschichtet ist. Die vier geraden Ränder der Spiegelplatte 2 bilden Spiegelstirnflächen 2b die jeweils durch ein Lichtleitprofil 3 abgedeckt sind.

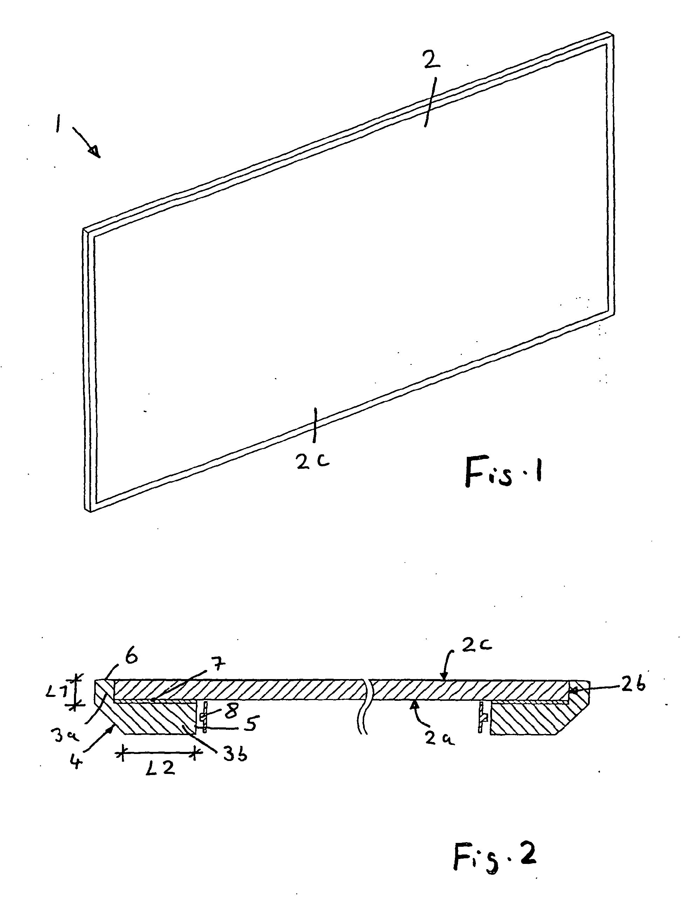

Im Ausführungsbeispiel nach Figur 1 sind alle vier Ränder bzw. Stirnflächen 2b von einem geradem Lichtleitprofil 3 bedeckt, so dass die vier Lichtleitprofile 3 einen die Spiegelplatte 2 umrandenden Rahmen bilden. Statt dessen können die Lichtleitprofile 3 aber auch nur an zwei gegenüberliegenden Rändern oder an einem einzigen Rand befestigt sein.

Die Lichtleitprofile 3 besitzen jeweils einen L-förmigen Querschnitt mit einem kürzeren ersten Schenkel 3a und einem längerem zweiten Schenkel 3b. Der erste Schenkel 3a überdeckt die Stirnfläche 2b und der zweite Schenkel 3b überdeckt den rückseitigen Rand der Rückseite 2a der Platte 2. Hierbei stehen die beiden Schenkel 3a, 3b rechtwinklig aufeinander und im Verbindungsbereich beider Schenkel weist das Lichtleitprofil 3 eine Schrägfläche 4 auf, die vorzugsweise in einem 45 Grad Winkel zur Spiegelvorderseite 2c steht.

In der in Figur 2 dargestellten Leuchte bildet das innere Ende des zweiten Schenkels 3b eine Lichteintrittsfläche 5 die rechtwinkelig zur Rückseite 2a angeordnet ist und vor der zahlreiche Leuchtdioden nebeneinander in gleichen Abständen befestigt sind, deren Licht vom zweiten Schenkel 3b geleitet wird, zur Schrägfläche 4, um dort in den ersten Schenkel 3a reflektiert zu werden und um dann auszutreten aus der Lichtaustrittsfläche 6 die vom vorderen Ende des ersten Schenkels 3a gebildet wird.

Die Lichtaustrittsfläche 6 weist hierbei eine Breite von 3 bis 10 mm auf und ist damit vorzugsweise schmaler als die Breite der Lichteintrittsfläche 5. Dies führt dazu, dass eine besonders schmale Lichtaustrittsfläche gebildet wird bei einer optimalen vorderen Lichtverteilung in den Raum. Dabei ist auch zu beachten, dass die Länge L1 des ersten Schenkels kleiner ist als die Länge L2 des zweiten Schenkels 3b. Damit ist dafür gesorgt, dass das Licht durch das Lichtleitprofil 3 hindurch einen verhältnismäßig großen Weg durchläuft und damit die einzelnen Leuchtdioden an der Vorderseite des Spiegels nicht erkennbar sind.

Die Lichtaustrittsfläche 6 liegt vorzugsweise in Höhe der Spiegelvorderseite bzw. der Spiegelvorderfläche 2c, so dass die Lichtaustrittsfläche nach vorne nicht übersteht. Hierdurch bildet die Lichtaustrittsfläche 6 eine Ebene mit der planen Spiegelvorderseite. Hierbei kann die Lichtaustrittsfläche 6 aber auch nicht eben, sondern leicht konvex gewölbt sein, um eine breite Abstrahlung des Lichtes nach vorne zu erreichen. Ferner kann die Lichtaustrittsfläche gegenüber der Spiegelvorderfläche 2c derart schräg gestellt sein, dass der äußere Rand der Lichtaustrittsfläche weiter vorne liegt als der innere dem Spiegel nahe Rand. Hierdurch ist die Lichtabstrahlung aus der Lichtaustrittsfläche 6 stärker zur Raummitte vor dem Spiegel gerichtet.

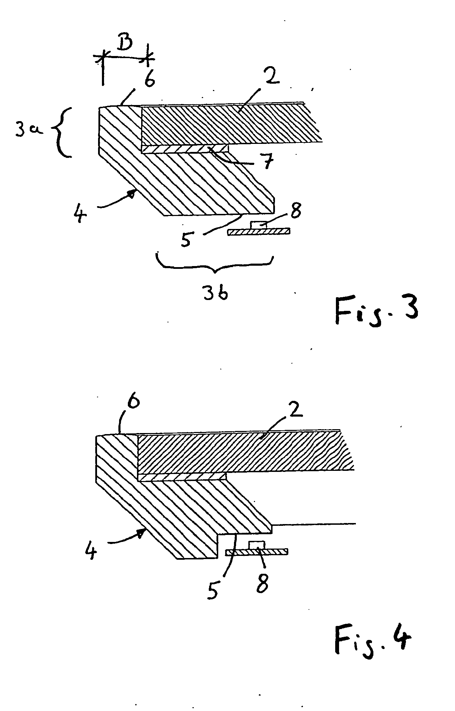

Das Lichtleitprofil nach Figur 3 unterscheidet sich von dem bisher beschriebenen nur dadurch, dass die Lichteintrittsfläche 5 an der Rückseite des zweiten Schenkels 3b angeordnet ist. Hierbei kann die Rückseite des zweiten Schenkels einen Rücksprung 3c bilden, wobei der Rücksprung eine zur Spiegelrückseite parallele Lichteintrittsfläche 5 bildet und die Leuchtdioden 8 vom Rücksprung aufgenommen sind, so dass sie gegenüber dem Lichtleitprofil nach hinten nicht vorspringen, siehe Figur 4.

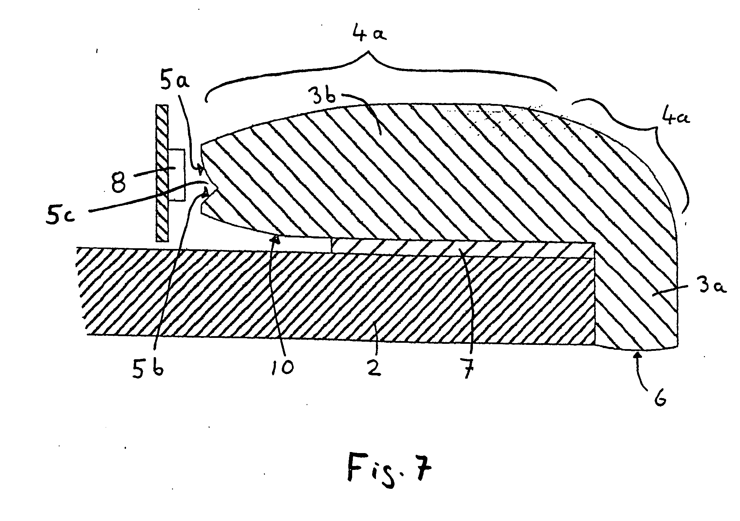

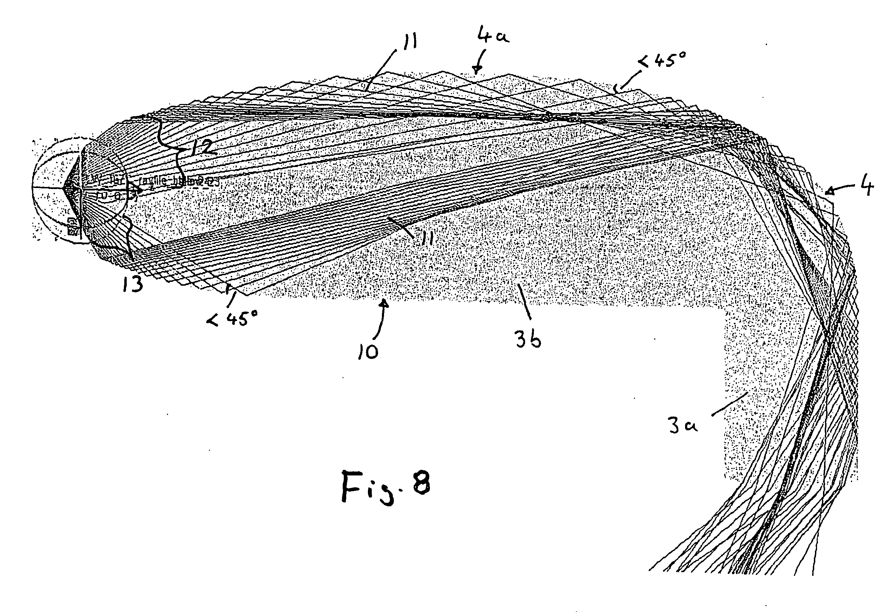

Die Ausführung nach den Figuren 7 und 8 unterscheidet sich von den zuvor beschriebenen zum einen dadurch, dass die Schrägfläche 4, die Außenfläche 4a und die innen dem Spiegel zugewandte Seitenfläche 10 des zweiten Schenkels 3b nicht eben sondern konvex ausgeführt sind. Hierbei ist die Fläche 4 stärker nach außen gewölbt als die Fläche 4a.

Ferner ist die Lichteintrittsfläche 5 in mindestens zwei Eintrittsflächenbereiche 5a und 5b aufgeteilt, die eine Längsausnehmung bzw. eine Längsnut 5c bilden, auf die das Licht der Leuchtdioden 8 trifft. Hierbei ist der vom Spiegel weiter entfernte Flächenbereich 5a konvex und der zweite Flächenbereich 5b eben oder konvex geformt. Stattdessen können aber auch beide Bereiche 5a und 5b eine konkave Fläche zum Ausbilden der Nut 5c bilden. In beiden Fällen wird das Licht der LED's in zwei Strahlenbündel 12, 13 aufgeteilt, die kontrolliert und verlustarm zur Austrittfläche 6 gelangen.

Unter "konvexe" und "konkave" Wölbung wird stets eine sich längserstreckende Wölbung gleich bleibend über die Länge des Lichtleitprofils 3 verstanden.

Die in Figur 8 in den Querschnitt des Lichtleitprofils 3 eingezeichneten Lichtstrahlen 11 zeigen deutlich, dass die in die Lichteintrittsfläche 5 (bzw. in deren Bereiche 5a und 5b) eintretenden Lichtstrahlen 11 als zwei Strahlenbündel 12, 13 an gegenüberliegenden Flächen 4a und 10 des transparenten Kunststoffes (insbesondere Acryl) stets total reflektiert werden (Auftreffwinkel stets kleiner 45 Grad) und damit äußerst verlustarm aus der Fläche 6 derart austreten, dass sie schräg zur Vorderseite zu einer vor dem Spiegel stehenden Person gerichtet sind, um diese zu beleuchten.

Zwischen dem ersten Schenkel 3a und/oder dem zweiten Schenkel 3b und dem Spiegel ist eine Zwischenlage 7 aus weichem Material insbesondere aus Kunststoff, Gummi, Kork oder Pappe als Zwischenablage angeordnet.

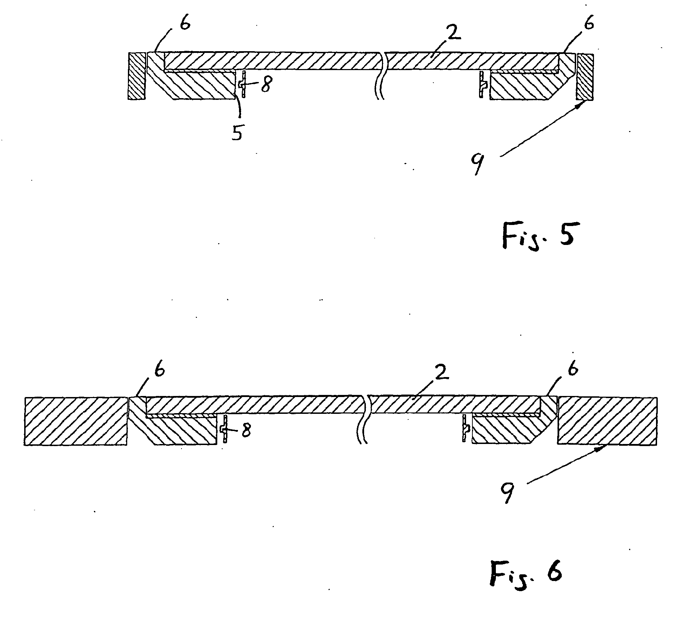

Außen um den Wandspiegel und damit auch um die Lichtleitprofile kann noch in zusätzlicher Rahmen 9 aus verchromten Metall oder Kunststoff (Figur 5) oder aus Holz (Figur 6) sein.

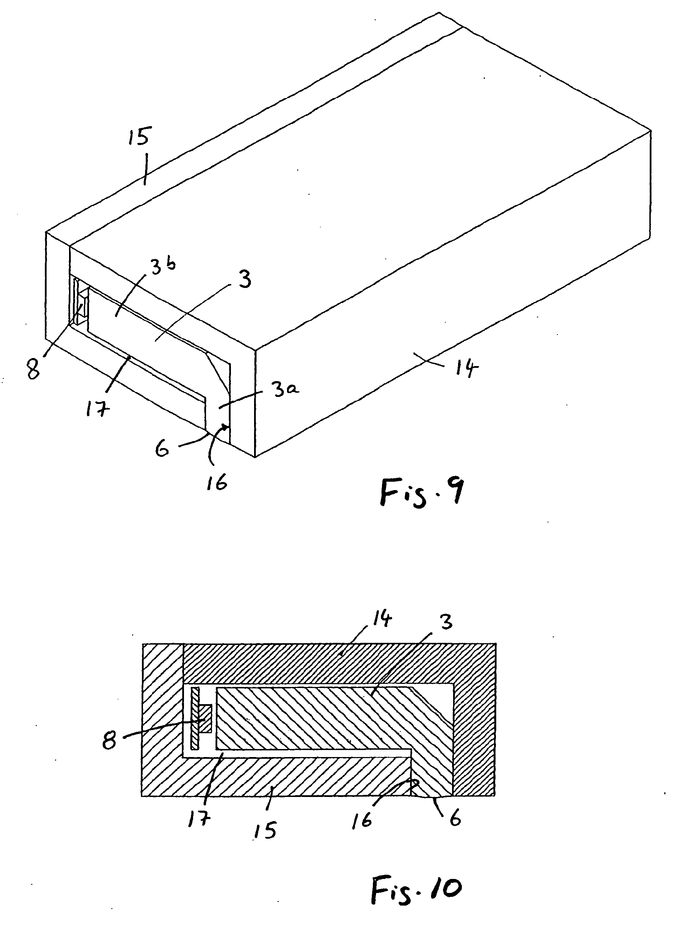

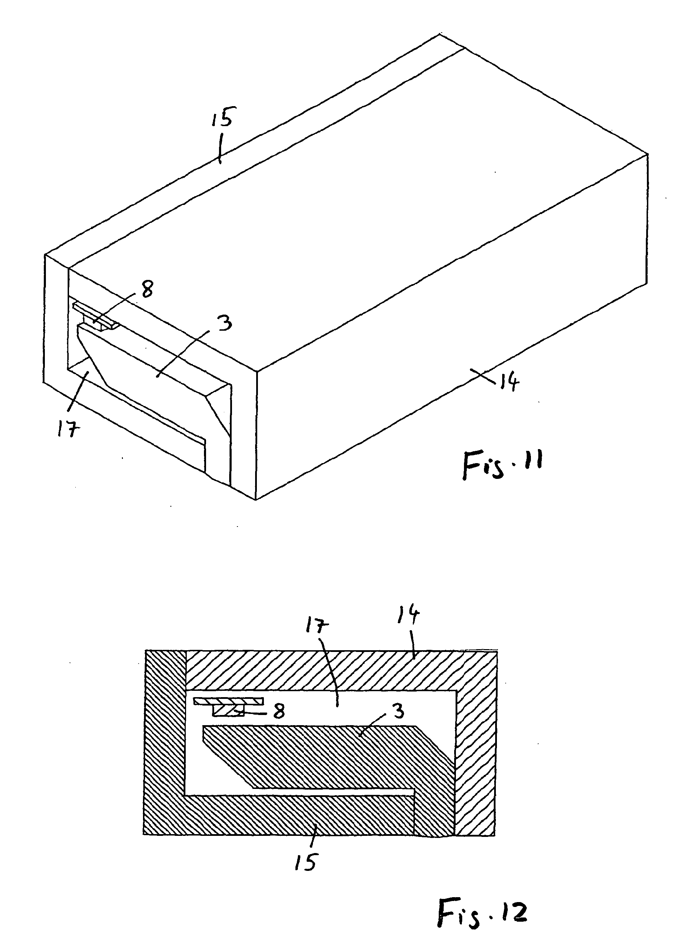

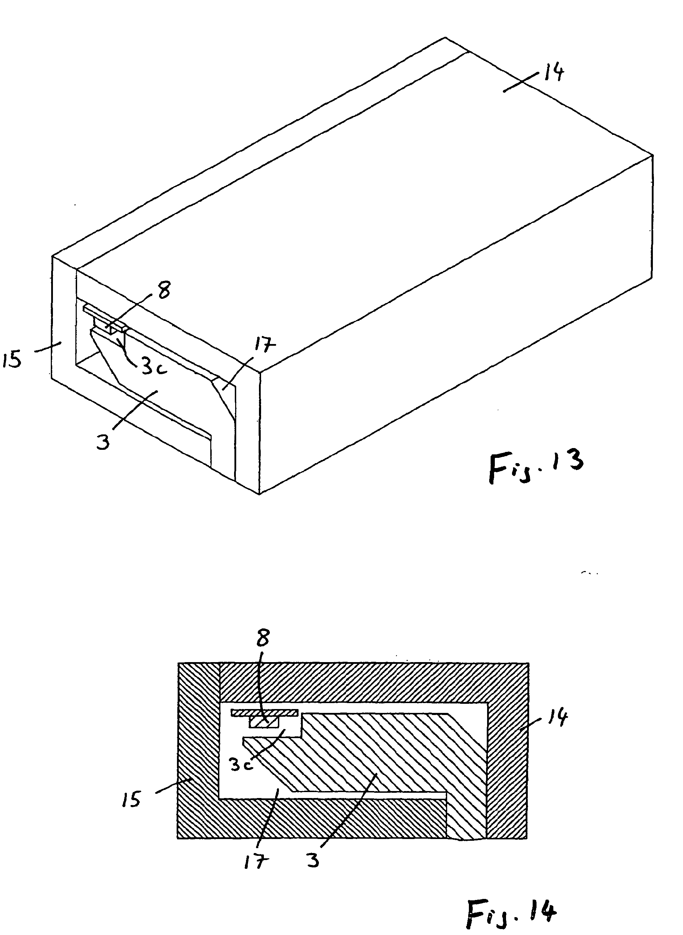

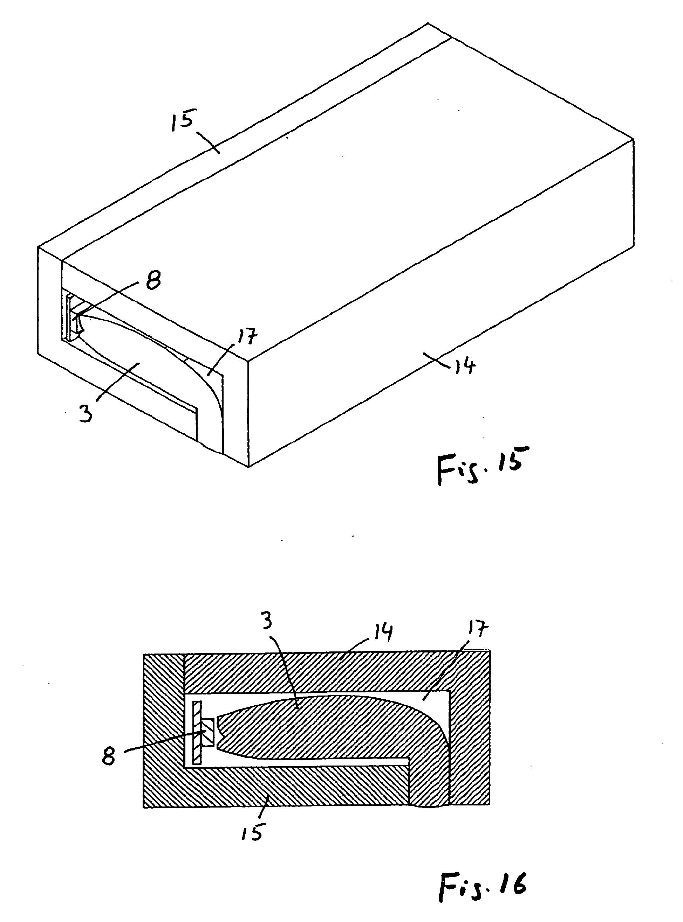

In den Fig. 9 bis 16 sind Leuchten dargestellt, die sich von üblichen Leuchten dadurch unterscheiden, dass ihre Länge beliebig groß sein kann bei gleich bleibendem Querschnitt. Sie weisen innen das bereits oben beschriebene Lichtleitprofil 3 auf, wobei das Lichtleitprofil nicht nur die in den Fig. 1 bis 6 dargestellte Querschnittsform, sondern entsprechend Fig. 15 und 16 auch die Querschnittsform nach den Fig. 7 und 8 aufweisen kann. Ferner zeigen die Fig. 11 bis 14, dass die Leuchtdioden 8 auch an der Seite und auch in einem Rücksprung 3c angeordnet sein können.

Das Lichtleitprofil 3 und die in regelmäßigen Abständen eng nebeneinander befestigten Leuchtdioden 8 befinden sich innerhalb eines Innenraums 17, der von zwei L-förmigen Abdeckprofilen 14, 15 gebildet wird, die das Lichtleitprofil 3 zumindest auf vier Seiten umgeben. Alle Profile 3, 14 und 15 liegen zueinander parallel, so dass die Leuchte einen Profilstab bildet.

Die Profile 14 und 15 lassen einen Längsspalt 16 frei, in dem der erste Schenkel 3a des Lichtleitprofils 3 insbesondere formschlüssig einliegt, wobei die Lichtaustrittsfläche 6 mit den Außenflächen der Leuchte fluchtet, so dass der Schenkel 3a nach außen nicht oder nur unwesentlich aufgrund seiner konvexen Wölbung vorsteht.

Eine solche profilförmige Leuchte weist geringe Außenabmessungen auf und kann für die verschiedensten Zwecke insbesondere innerhalb und außerhalb von Gebäuden verwendet werden.

## Patentansprüche

1. Leuchte für den Rand eines Wandspiegels, wobei
- ein Lichtleitprofil (3)vorgesehen ist mit einem über seine gesamte Länge gleich bleibendem L-förmigen Querschnitt, wobei aus der Endfläche des ersten Schenkels (3a) des Profils (3) das Licht austritt, das in den zweiten Schenkel (3b) des Profils durch Leuchtdioden (8) eingebracht wird,
- an der Verbindungsfläche beider Schenkel (3a, 3b) das Lichtleitprofil (3) eine Schrägfläche (4) aufweist, an der die Lichtstrahlen nach ihrem Eintritt in das Lichtleitprofil zur Lichtaustrittsfläche (6) hin reflektiert werden,
- die Schrägfläche (4) konvex gewölbt ist, **dadurch gekennzeichnet**
- **dass** die konvexe Wölbung der Schrägfläche (4) in eine schwächer konvex gewölbte Außenfläche (4a) des zweiten Schenkels (3b) übergeht.

2. Leuchte nach Anspruch 1, **dadurch gekennzeichnet, dass** die Lichtaustrittsfläche (6) konvex gewölbt ist.

3. Leuchte nach einem der vorherigen Ansprüche, **dadurch gekennzeichnet, dass** die Lichteintrittsfläche (5) das innere Ende des zweiten Schenkels (3b) des Lichtleitprofils (3) bildet.

4. Leuchte nach einem der vorherigen Ansprüche, **dadurch gekennzeichnet, dass** die Lichteintrittsfläche (5) in der hinteren Seitenfläche des zweiten Schenkels (3b) angeordnet ist.

5. Leuchte nach einem der vorherigen Ansprüche, **dadurch gekennzeichnet, dass** die Lichteintrittsfläche (5) von einem Rücksprung (3c) der hinteren Seitenfläche des zweiten Schenkels (3b) gebildet ist, wobei die Leuchtdioden (8) im Rücksprung (3c) einliegen.

6. Leuchte nach einem der vorherigen Ansprüche, **dadurch gekennzeichnet, dass** die Lichteintrittsfläche (5) konkav geformt ist.

7. Leuchte nach einem der vorherigen Ansprüche, **dadurch gekennzeichnet, dass** die Lichteintrittsfläche (5) in mindestens zwei Eintrittsflächenbereichen (5a, 5b) aufgeteilt ist, die eine Längsnut (5c) bilden.

8. Leuchte nach Anspruch 7, **dadurch gekennzeichnet, dass** eine oder beide Eintrittsflächenbereiche (5a, 5b) konvex geformt sind.

9. Leuchte nach einem der vorherigen Ansprüche, **dadurch gekennzeichnet, dass** der zweite Schenkel (3b) eine größere Länge (L2) aufweist als die Länge (L1)des ersten Schenkels (3a).

10. Leuchte nach einem der vorherigen Ansprüche, **dadurch gekennzeichnet, dass** sie an einem Wandspiegel (1) insbesondere in quadratischer oder Rechteckform angeordnet ist, wobei die Leuchte(n) den Raumbereich vor dem Spiegel ausleuchtet und entlang mindestens eines Spiegelrandes das Profil (3) aus lichtleitendem transparentem Kunststoff befestigt ist, mit einer zur Spiegelvorderseite gerichteten Lichtaustrittsfläche (6) und mit einem die Spiegelrückseite (2a) hintergreifendem Bereich (3b), der die Lichteintrittsfläche (5) aufweist, auf die die Leuchtdioden (8) mit ihren Lichtstrahlen gerichtet sind.

11. Leuchte nach einem der vorherigen Ansprüche, **dadurch gekennzeichnet, dass** die Leuchte an einem Wandspiegel angeordnet ist und dass das Lichtleitprofil (3) parallel zum Spiegelrand an diesem angeordnet ist, wobei das Lichtleitprofil (3) einen L-förmigen Querschnitt aufweist, deren erster Schenkel (3a) die seitliche Stirnfläche (2b) des Spiegelrandes abdeckt und dessen zweiter Schenkel (3b) die Rückseite (2a) des Spiegels hintergreift.

12. Leuchte nach Anspruch 11, **dadurch gekennzeichnet, dass** die Lichtaustrittsfläche (6) in der Ebene der Spiegelvorderfläche (2c) liegt.

13. Leuchte nach einem der Ansprüche 11 oder 12, **dadurch gekennzeichnet, dass** zwischen dem ersten Schenkel (3a) und/oder dem zweiten Schenkel (3b) und dem Spiegel eine Zwischenlage (7) aus weichem Material insbesondere aus Kunststoff, Gummi, Kork oder Pappe angeordnet ist.

## Claims

1. Lamp for the edge of a wall mirror, comprising a light-guide profile (3) with an L-shaped cross section which remains the same over its entire length, the light exiting from the end surface of the first leg (3a) of the profile (3) and being introduced into the second leg (3b) of the profile by light-emitting diodes (8), the light-guide profile (3) being provided at the joining surface of the two legs (3a, 3b) with an inclined surface (4) at which the light rays are reflected towards the light-exit surface (6) after they enter the light-guide profile, and the inclined surface (4) having a convex curvature, **characterised in that** the convex curvature of the inclined surface (4) turns into a less convex curvature at the outer surface (4a) of the second leg (3b).

2. Lamp according to claim 1, **characterised in that** the light-exit surface (6) has a convex curvature.

3. Lamp according to one of the preceding claims, **characterised in that** the light-entry surface (5) forms the inner end of the second leg (3b) of the light-guide profile (3).

4. Lamp according to one of the preceding claims, **characterised in that** the light-entry surface (5) is arranged in the rear side surface of the second leg (3b).

5. Lamp according to one of the preceding claims, **characterised in that** the light-entry surface (5) is formed by a projection (3c) on the rear side surface of the second leg (3b), the light-emitting diodes (8) being inserted into the projection (3c).

6. Lamp according to one of the preceding claims, **characterised in that** the light-entry surface (5) is concave.

7. Lamp according to one of the preceding claims, **characterised in that** the light-entry surface (5) is divided into at least two entry-surface areas (5a, 5b) forming a longitudinal groove (5c).

8. Lamp according to claim 7, **characterised in that** one or both of the entry-surface areas (5a, 5b) is/are convex.

9. Lamp according to one of the preceding claims, **characterised in that** the second leg (3b) has a greater length (L2) than the length (L1 ) of the first leg (3a).

10. Lamp according to one of the preceding claims, **characterised in that** it is arranged on a wall mirror (1), in particular of square or rectangular shape, the lamp(s) illuminating the area in front of the mirror and the profile (3) of light-conducting transparent plastic being secured along at least one edge of the mirror, with a light-exit surface (6) directed towards the front surface of the mirror and an area (3b) engaging behind the back surface (2a) of the mirror having a light-entry surface (5) on to which the light rays of the light-emitting diodes (8) are directed.

11. Lamp according to one of the preceding claims, **characterised in that** the lamp is arranged on a wall mirror and that the light-guide profile (3) is arranged on the edge of the mirror parallel thereto, the light-guide profile (3) having an L-shaped cross section, the first leg (3a) of which covers the lateral end surface (2b) of the edge of the mirror and the second leg (3b) of which engages behind the back surface (2a) of the mirror.

12. Lamp according to claim 11, **characterised in that** the light-exit surface (6) lies in the plane of the front surface (2c) of the mirror.

13. Lamp according to one of claims 11 or 12, **characterised in that** an intermediate layer (7) of soft material, in particular plastic, rubber, cork or board, is arranged between the first leg (3a) and/or the second leg (3b) and the mirror.

## Revendications

1. Lampe pour le bord d'un miroir mural, dans laquelle
- il est prévu un profilé conducteur de lumière (3) pourvu d'une section transversale en L constante sur la totalité de sa longueur, la lumière, émise dans la seconde branche (3b) du profilé par des diodes électroluminescentes (8), émergeant de la surface extrême de la première branche (3a) du profilé (3),
- le profilé conducteur de lumière (3) présente une surface oblique (4) sur la surface de jonction des deux branches (3a, 3b), surface sur laquelle les rayons lumineux sont réfléchis en direction de la surface d'émergence de lumière (6) après leur entrée dans le profilé conducteur de lumière,
- la surface oblique (4) a une courbure convexe, **caractérisée en ce que**
- la courbure convexe de la surface oblique (4) se prolonge par une surface extérieure (4a), de courbure convexe plus faible, de la seconde branche (3b).

2. Lampe suivant la revendication 1, **caractérisée en ce que** la surface d'émergence de lumière (6) a une courbure convexe.

3. Lampe suivant l'une des revendications précédentes, **caractérisée en ce que** l'extrémité intérieure de la seconde branche (3b) du profilé conducteur de lumière (3) forme la surface d'incidence de lumière (5).

4. Lampe suivant l'une des revendications précédentes, **caractérisée en ce que** la surface d'incidence de lumière (5) est disposée dans la surface latérale arrière de la seconde branche (3b).

5. Lampe suivant l'une des revendications précédentes, **caractérisée en ce que** la surface d'incidence de lumière (5) est formée par un retrait (3c) de la surface latérale arrière de la seconde branche (3b), les diodes électroluminescentes (8) s'insérant dans le retrait (3c).

6. Lampe suivant l'une des revendications précédentes, **caractérisée en ce que** la surface d'incidence de lumière (5) est de forme concave.

7. Lampe suivant l'une des revendications précédentes, **caractérisée en ce que** la surface d'incidence de lumière (5) est partagée en au moins deux zones de surfaces d'incidence (5a, 5b), qui forment une gorge longitudinale (5c).

8. Lampe suivant la revendication 7, **caractérisée en ce que** l'une ou les deux zones de surfaces d'incidence (5a, 5b) sont de forme convexe.

9. Lampe suivant l'une des revendications précédentes, **caractérisée en ce que** la seconde branche (3b) présente une longueur (L2) supérieure à la longueur (L1) de la première branche (3a).

10. Lame suivant l'une des revendications précédentes, **caractérisée en ce qu'**elle est disposée sur un miroir mural (1), en particulier de forme carrée ou rectangulaire, la(les) lampe(s) éclairant la zone de l'espace située devant le miroir et le profilé (3) en matière plastique transparente conductrice de lumière étant fixé le long d'au moins un bord du miroir, avec une surface d'émergence de lumière (6) orientée en direction du côté avant du miroir et avec une zone (3b) enserrant le côté arrière du miroir (2a), laquelle zone présente la surface d'incidence de lumière (5) sur laquelle sont orientées les diodes électroluminescentes (8) par leurs rayons lumineux.

11. Lampe suivant l'une des revendications précédentes, **caractérisée en ce que** la lampe est disposée sur un miroir mural et que le profilé conducteur de lumière (3) est disposé sur le bord du miroir, parallèlement à ce dernier, le profilé conducteur de lumière (3) présentant une section transversale en L, dont la première branche (3a) recouvre la surface frontale latérale (2b) du bord du miroir et dont la seconde branche (3b) enserre le côté arrière (2a) du miroir.

12. Lampe suivant la revendication 11, **caractérisée en ce que** la surface d'émergence de lumière (6) se situe dans le plan de la surface avant (2c) du miroir.

13. Lampe suivant l'une des revendications 11 et 12, **caractérisée en ce qu'**une couche intermédiaire (7) composée d'un matériau souple, en particulier de matière plastique, de caoutchouc, de liège ou de carton, est disposée entre la première branche (3a) et/ou la seconde branche (3b) et le miroir.
